(19) Europäisches Patentamt
European Patent Office
Office européen des brevets

(11) **EP 4 550 212 A1**

(12) **EUROPEAN PATENT APPLICATION**

(43) Date of publication:
07.05.2025 Bulletin 2025/19

(21) Application number: 24208165.1

(22) Date of filing: 22.10.2024

(51) International Patent Classification (IPC):
*G06N 3/045* (2023.01)    *F01D 21/00* (2006.01)
*G06T 7/00* (2017.01)

(52) Cooperative Patent Classification (CPC):
**G06T 7/0004; F01D 5/005; F01D 21/003;**
**F01D 21/10; F01D 21/14; F01D 25/007;**
**G06N 3/045;** F01D 5/141; F05D 2250/60;
F05D 2260/80; F05D 2260/81; F05D 2260/82;
F05D 2260/821; F05D 2260/83; F05D 2270/09;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 30.10.2023 GB 202316535

(71) Applicant: **Rolls-Royce plc**
**London N1 9FX (GB)**

(72) Inventors:
• **Fortune, James**
**Derby, DE24 8BJ (GB)**
• **Pinzariu, Narcisa**
**Derby, DE24 8BJ (GB)**
• **Glazier, Lee**
**Derby, DE24 8BJ (GB)**

(74) Representative: **Rolls-Royce plc**
**Moor Lane (ML-9)**
**PO Box 31**
**Derby DE24 8BJ (GB)**

(54) **METHODS AND APPARATUSES FOR PERFORMING CLASSIFICATION OF A CLASSIFICATION SUBJECT**

(57) Embodiments described herein relate to methods and apparatuses for performing classification of a classification subject. A computer implemented method for initiating use of one or more classifier models to perform classification of a classification subject into one of a plurality of classes comprises: for each of a plurality of classifier models, obtaining respective classifier confusion information, wherein the classifier confusion information indicates, for each actual class in the plurality of classes, the likelihood of the classifier model classifying the actual class as each predicted class in the plurality of classes; obtaining risk confusion information indicating a risk associated with each actual class and predicted class pair; for each of the plurality of classifier models, determining a respective risk metric from the respective classifier confusion information and the risk confusion information; and initiating use of one or more of the plurality of classifier models based on the respective risk metrics.

FIG. 1

(52) Cooperative Patent Classification (CPC): (Cont.)
F05D 2270/11; F05D 2270/112; F05D 2270/114;
F05D 2270/20; F05D 2270/332; F05D 2270/709;
F05D 2270/71; F05D 2270/8041; F05D 2300/604;
F05D 2300/605; F05D 2300/606; F05D 2300/607;
F05D 2300/608; F05D 2300/609

**Description**

TECHNICAL FIELD

Embodiments described herein relate to methods and apparatuses for initiating use of and/or using one or more classifier models to perform classification of a classification subject into one of a plurality of classes.

BACKGROUND

Currently, there is no standard or accepted methods for assessing any risk that may be inherent in using an artificial intelligence (AI) or machine learning (ML) approach for feature classification. For example, a fully autonomously solution, using ML, may be used to perform feature classification in order to replace manual visual inspection of manufactured components to check for faults. For example, a ML model may receive images of the manufactured components and may be used to analyse them to determine if they contain faults or anomalies, and if so to classify the type of fault or anomaly.

It will however be appreciated that, when performing such classification, there may be a risk of misclassifying one type of fault as a different type of fault. In some applications such misclassification may not be associated with any particular risk, however, in some cases there may be much higher risk associated with misclassification of a first type of fault as a second type of fault than there would be associated with misclassification of the second type of fault as the first type of fault. In other words, the risk associated with misclassification may not be symmetrical.

Without a means for assessing and/or managing the risks of misclassification of types of faults, it is unlikely that regulatory approval could be achieved for autonomously classifying classification subjects in some applications, for example for classifying faults on turbine blades.

SUMMARY

According to some embodiments there is provided a computer implemented method for initiating use of one or more classifier models to perform classification of a classification subject into one of a plurality of classes. The method comprises for each of a plurality of classifier models, obtaining respective classifier confusion information, wherein the classifier confusion information indicates, for each actual class in the plurality of classes, the likelihood of the classifier model classifying the actual class as each predicted class in the plurality of classes; obtaining risk confusion information indicating a risk associated with each actual class and predicted class pair; for each of the plurality of classifier models, determining a respective risk metric from the respective classifier confusion information and the risk confusion information; and initiating use of one or more of the plurality of classifier models based on the respective risk metrics.

According to some embodiments there is provided a risk assessment apparatus for initiating use of one or more classifier models to perform classification of a classification subject into one of a plurality of classes, the risk assessment device comprising processing circuitry configured to perform the method as described above.

According to some embodiments there is provided computer implemented method for using a plurality of classifier models to perform classification of a classification subject into one of a plurality of classes. The method comprises obtaining an indication of respective risk metrics associated with each of the plurality of classifier models; and utilizing the plurality of classifier models and the respective risk metrics to perform classification of the classification subject.

According to some embodiments there is provided an evaluation apparatus for using a plurality of classifier models to perform classification of a classification subject into one of a plurality of classes, the evaluation device comprising processing circuitry configured to perform the method as described above.

According to some embodiments there is provided a computer implemented method for training a classifier model to perform classification of a classification subject into one of a plurality of classes. The method comprises performing initial training of the classifier model; obtaining classifier confusion information for the classifier model, wherein the classifier confusion information indicates, for each actual class in the plurality of classes, the likelihood of the classifier model classifying the actual class as each predicted class in the plurality of classes; obtaining risk confusion information indicating a risk associated with each actual class and predicted class pair; determining a risk metric from the classifier confusion information and the risk confusion information, and retraining the classifier model utilizing the risk metric.

According to some embodiments there is provided a model training apparatus for training a classifier model to perform classification of a classification subject into one of a plurality of classes, the model training device comprising processing circuitry configured to perform as described above.

According to some embodiments there is provided a machine readable medium storing instructions which, when executed by a processor, cause the processor to carry out any of the methods described above.

For the purposes of the present disclosure, the term "ML model" encompasses within its scope the following concepts:

Machine Learning algorithms, comprising processes or instructions through which data may be used in a training process to generate a model artefact for performing a given task, or for representing a real world process or system;

the model artefact that is created by such a training process, and which comprises the computational architecture that performs the task; and

the process performed by the model artefact in order to complete the task. References to "ML model", "model", model parameters", "model information", etc., may thus be understood as relating to any one or more of the above concepts encompassed within the scope of "ML model".

## BRIEF DESCRIPTION OF THE DRAWINGS

For a better understanding of the embodiments of the present disclosure, and to show how it may be put into effect, reference will now be made, by way of example only, to the accompanying drawings, in which:

FIG. 1 illustrates computer implemented method for initiating use of one or more classifier models to perform classification of a classification subject into one of a plurality of classes;

FIG. 2 illustrates two examples of confusion matrices for two different classifier models performing the same classification task;

FIG. 3 illustrates an example of a risk confusion matrix;

FIG. 4 illustrates two classifier specific risk matrices 401 and 402 determined from the classifier confusion matrices 201 and 202 and the risk confusion matrix 300;

FIG. 5 illustrates an example of a computer implemented method for using a plurality of classifier models to perform classification of a classification subject into one of a plurality of classes;

FIG. 6 illustrates a computer implemented method for training a classifier model to perform classification of a classification subject into one of a plurality of classes;

FIG. 7 illustrates an example system capable of implementing the methods of FIG. 1 and FIG. 5;

FIG. 8 illustrates a risk assessment device comprising processing circuitry (or logic);

FIG. 9 illustrates an evaluation device comprising processing circuitry (or logic);

FIG. 10 illustrates a model training device comprising processing circuitry (or logic).

## DETAILED DESCRIPTION

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

The following sets forth specific details, such as particular embodiments or examples for purposes of explanation and not limitation. It will be appreciated by one skilled in the art that other examples may be employed apart from these specific details. In some instances, detailed descriptions of well-known methods, circuits, and devices are omitted so as not to obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Moreover, where appropriate the technology can additionally be considered to be embodied entirely within any form of computer-readable memory, such as (ROM, EEPROM, Flash memory, a memory disc, RAM etc.) solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

Particular embodiments are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

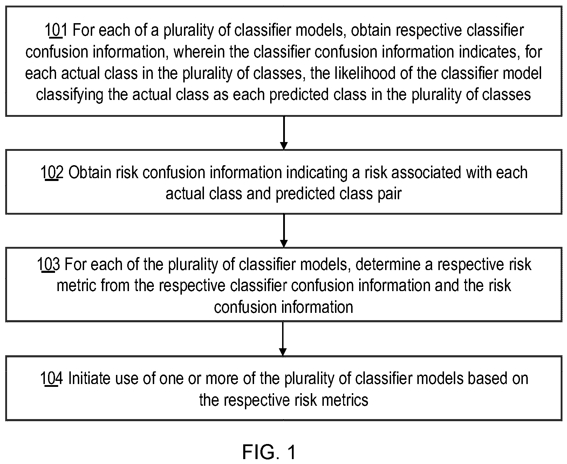

Embodiments described herein may be utilised to initiate use of one or more classifier models to perform classification of a classification subject into one of a plurality of classes. In particular, the embodiment described herein takes into account and alleviates real-world risk that may be associated with misclassification of a classification subject. **FIG. 1** illustrates computer implemented method for initiating use of one or more classifier models to perform classification of a classification subject into one of a plurality of classes.

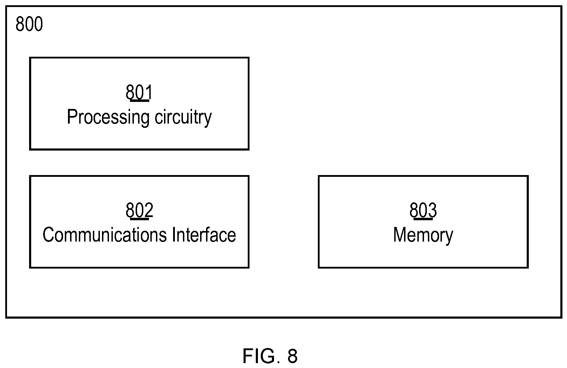

The method of FIG. 1 may be performed by a risk assessment apparatus (e.g., risk assessment apparatus 800 as described with reference to FIG. 8), which may comprise a physical or virtual apparatus, and may be implemented in a computing device or server apparatus and/or in a virtualized environment, for example in a cloud, edge cloud or fog deployment.

It will be appreciated that the method of FIG. 1 may be applied to any form of classification task and in particular those for which a real-world risk associated with misclassification is not symmetrical. For example, some non-limiting examples comprise:

> 1) a classification subject comprising an image of a manufactured component and the plurality of classes comprising different anomalies in an image of the manufactured component. For example, the anomalies may comprise one or more of: a nick, a dent, a scratch, a secondary grain, re-crystallisation, machining mark, and sliver. Other inspection tasks may look for anomalies such as pitting, wrinkling or rippling in the surface, macro-scale grain anomalies, fretting, galling and surface discoloration
> 2) a classification subject comprising an audio segment comprising voice, and the plurality of classes comprising identifications of different people;
> 3) a classification subject comprising image data obtained from a driverless car, and the plurality of classes comprising different objects in a driving environment.

In step 101 the method comprises, for each of a plurality of classifier models, obtaining respective classifier confusion information, wherein the classifier confusion information indicates, for each actual class in the plurality of classes, the likelihood of the classifier model classifying the actual class as each predicted class in the plurality of classes.

The plurality of classifier models may all be the same type of ML model or may comprise different types of ML models (e.g., neural networks, decision tress, K-nearest neighbour classifiers, etc.)

In some examples, the classifier confusion information may comprise a confusion matrix. A confusion matrix is associated with a particular classifier model, wherein the classifier model receives a classification subject as an input (e.g., an image), and outputs a predicted class for the classification subject.

A confusion matrix may be defined as n x n matrix which indicates the rate of classification by the classifier model of an "actual class" of the classification subject (e.g., the real class of the classification subject) as a particular "predicted class". It will be appreciated that an n x n confusion matrix is for a classification task having n classes. In other words, the confusion matrix may be considered to track the pairwise classification / misclassification rates for a class of interest. It will be appreciated that to generate a confusion matrix for a classifier model, the classifier model may be tested on training data where the actual classes of the classification subjects in the training data is known.

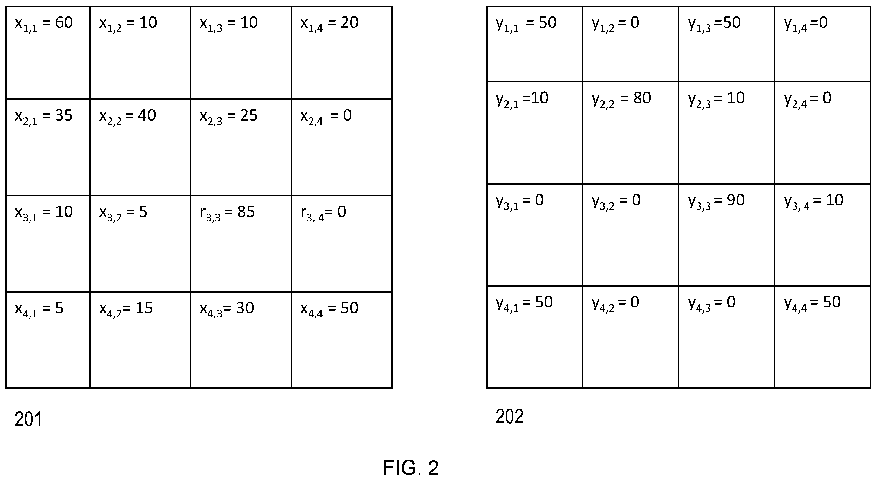

**FIG. 2** illustrates two examples of confusion matrices for two different classifier models performing the same classification task. For example, a first classifier model (e.g., a Decision Tree) may be associated with the confusion matrix 201 and a second classifier model 202 (e.g., a Neural Network) may be associated with the confusion matrix 202. In this example there are 4 classes (it will be appreciated that there may be any number, N, of classes).

In this example, the classes are classes 1 to 4. For the example in FIG. 2, the actual class of a classification subject represented by the subscript, i, and the predicted class is indicated by the subscript, j. It will therefore be appreciated that the elements $x_{i,j}$ and $y_{ij}$ of the matrix indicates the rate at which each classifier model has classified classification subjects having the class i as having the class j. The principal diagonal elements ($x_{11},..., x_{44}$ and $y_{11}, ..., y_{44}$) of the matrices represent correct classifications performed by the classifier models.

The elements of the confusion matrices may indicate the percentage of samples of the actual class that have been classified as the predicted class or may in some cases indicate the actual number of classifications that the respective classifier model has made of the actual class to the predicted class. It will be appreciated that where the elements comprise the actual number of classifications, the percentage of samples can be determined from the total number of classifications in the matrix for a particular actual class.

For a particular classifier model therefore, the confusion matrix may be considered to indicate, for a given classification subject of an actual class, the likelihood that the classifier model will classify the classification subject into each of the predicted classes.

It will be appreciated that the information contained within a confusion matrix may be represented in forms other than a matrix. Therefore, it will be appreciated that classifier confusion information may be represented in forms other than a matrix.

In step 102, the method comprises obtaining risk confusion information indicating a risk associated with each actual class and predicted class pair.

It will be appreciated that when ML-based classification fails, in other words, where misclassification occurs (any of the off-diagonal elements in the confusion matrix) there may be a real-world risk associated with such a misclassification. Evaluation of the real-world risk will depend on the application that the ML based classification is being used for. For example, for the classification task where the classification subjects comprise images of turbine blades, the risk of classifying a secondary grain anomaly as anything else may be high. Secondary grains, if severe enough, can cause the turbine blade to fail in service which could lead to a single engine in-flight shut down; this may, for example, be considered a severity 8 event on a 1 - 10 severity scale.

In another example, for the classification task wherein the classification subjects comprise audio recordings of voice, the risk of misclassifying a person as the CEO of a company (who may have access to confidential information) may be higher than the risk of misclassifying a person as a factory worker.

It will also be appreciated that the risk associated with misclassification may not be symmetrical - for example the risk of misclassifying the CEO as a factory worker may be very low, but the risk of misclassifying a factory worker as the CEO may be very high.

It will be appreciated that how the real-world risk associated with a particular misclassification is determined may be dependent on the particular implementation of the application.

The risk confusion information may also be represented as a risk confusion matrix.

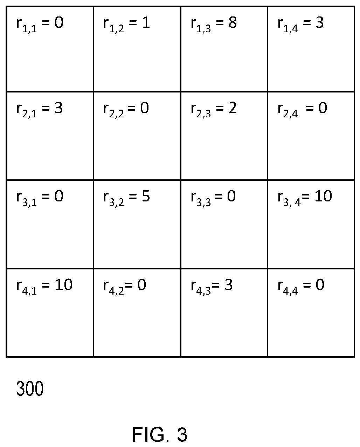

**FIG. 3** illustrates an example of a risk confusion matrix. It will be appreciated that the risk confusion matrix 300 may comprise corresponding elements to the confusion matrices 201 and 202, and so may also be a matrix of size n x n, where n is the number of classes. The risk confusion matrix 300 is therefore also a 4 x 4 matrix, similarly to the confusion matrices 201 and 202.

The diagonal elements of the risk confusion matrix 300 are 0, as these elements represent the risk of correct classification, which will inherently be 0.

The non-diagonal elements $r_{ij}$ represent the risk of a misclassification of the actual class i as the predicted class j. The elements $r_{ij}$ may for example be indicated as values from 0 to X (e.g., 10 or 100) where 0 is no risk (e.g., correct classification) and X is the highest risk (e.g. a misclassification that, if not corrected, may result in injury to a person, or allowing access to highly confidential documents etc).

It will be appreciated that whilst there may be plurality of classifier models capable of performing a classification task (e.g., classifying a classification subject into one of N classes), and therefore respective classifier confusion information for each classifier model, there is only one risk confusion matrix for each classification task.

In step 103, the method comprises for each of the plurality of classifier models, determining a respective risk metric from the respective classifier confusion information and the risk confusion information.

For example, where the respective classifier confusion information comprises a respective classifier confusion matrix, and the risk confusion information comprises a risk confusion matrix, step 103 may comprise determining a classifier specific risk matrix as a dot product of the respective classifier confusion matrix and the risk confusion matrix. In some examples, the respective risk metric may be the classifier specific risk matrix. In other examples, the respective risk metric may be determined by summing the elements of the classifier specific risk matrix to determine the respective risk metric.

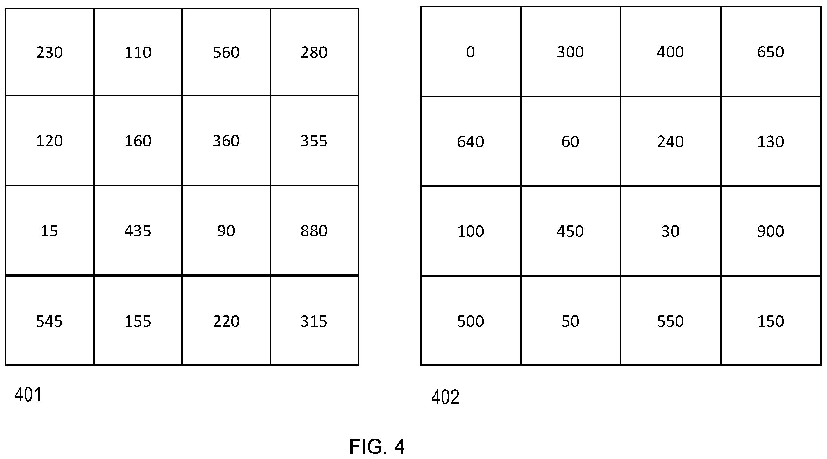

For example, **FIG. 4** illustrates two classifier specific risk matrices 401 and 402 determined from the classifier confusion matrices 201 and 202 and the risk confusion matrix 300.

It can be understood from FIG. 4 that the classifier specific risk metric (based on the classifier specific risk matrix 401) for the first classifier model may be 4829 and the classifier specific risk metric (based on the classifier specific risk matrix 402) for the second classifier model may be 5150. It will be appreciated that, in this example, the lower the classifier metric, the lower the overall risk associated with the classier model. Therefore, in this example, the second classifier model may be considered riskier than the first classifier model.

In step 104, the method comprises initiating use of one or more of the plurality of classifier models based on the respective risk metrics.

For example, step 104 may comprise selecting one of the plurality of classifier models for use in performing classification of the classification subject based on the respective risk metrics; and initiating performance of the classification using the selected classifier model. For example, for the first classifier model and the second classifier model, as the first classifier model is associated with a lower classifier specific risk metric, the method may select to use the first classifier model.

In some examples, where the risk metrics comprise the sum of the elements of the classifier specific risk matrices, the one of the plurality of classifier models may be selected as the classifier model associated with the lowest risk metric.

In some examples, however, where the risk metrics comprise the classifier specific risk matrices, the one of the plurality of classifier models may be selected based on some condition placed on the elements of the classifier specific risk matrices. For example, step 104 may comprise selecting a classifier model that has no individual element of the classifier risk metric that is higher than a threshold value. This threshold on the individual elements of the classifier specific risk matrices may also be applied in conjunction with an upper threshold on the sum of the elements of the classifier specific risk matrices.

This selection of step 104 may be made regardless of the fact that the first classifier model has an overall lower accuracy, as the diagonal values are generally lower. In other words, whilst the first classifier model is less likely to classify the classification subject correctly, it may be considered less likely to make a risky classification, such as for example the classification of a class 4 classification subject as a class 1 classification subject.

In some examples, step 104 may comprise selecting the classifier model associated with the lowest risk metric that also meets a condition associated with an accuracy of the classifier model. For example, condition may comprise a threshold condition for the accuracy of the classifier model. For example, the condition may be that all of the diagonal elements of the confusion matrix are over 50%. In this example, the second classifier model may be selected over the first classifier model as the element $x_{2,2}$ of the first confusion matrix 201 is 40%.

It will be appreciated that other conditions on the accuracy of the selected classifier model may be imposed. For example, a threshold may be applied to a total of the diagonal elements of the classifier confusion matrix.

In some examples, the step 104 may then further comprise transmitting a representation of the selected classifier model to an evaluation device (for example, as described with reference to FIG. 8).

In some examples, step 104 may comprise initiating determination of a combined classifier model wherein the combined classifier model is determined by weighting contributions from the plurality of classifier models based on the respective risk metrics.

For example, the combined classifier model may be determined from the first classifier model and the second classifier model if for example both the first classifier model and the second classifier model comprise NNs, then the weights from the layers of the NNs may be weighted according to the respective classifier risk metrics. In another example, layers from the different NNs may be combined, with the outputs of each layer weighted based on the respective risk metrics.

Step 104 may then further comprise initiating use of the combined classifier model to perform the classification. For example, the risk assessment device performing the method of FIG. 1 may transmit an indication to an evaluation device to cause the evaluation device to perform the classification. The indication may comprise a representation of the combined classifier model.

In some examples, step 104 comprises initiating determination of a combined output, wherein the combined output is determined by weighting outputs from each of the plurality of classifier models based on the respective risk metrics.

For example, the output of the first classifier model may be weighted based on the classifier specific risk metric 4829, and the output of the second classifier model may be weighted based on the classifier specific risk metric 5150.

For example, a combined output may be determined as:

mined as:

$$\text{Combined output} = \frac{\sum_k m_k output_k}{\sum_k m_k}$$

, where $m_k$ is the classifier specific risk metric for the classifier model k and $output_k$ is the output of the classifier model k.

For example, step 104 may be performed by transmitting the respective risk metrics to an evaluation device. The evaluation device may then utilize the plurality of classifier models to output respective outputs and may then determine the combined output based on the respective outputs and the received respective risk metrics.

It will be appreciated that in some examples, the risk assessment device and the evaluation device may form part of the same device. In other words, the determination of the respective risk metrics may be performed by the same device that then utilises the plurality of classifier models to determine a combined output or a combined classifier model.

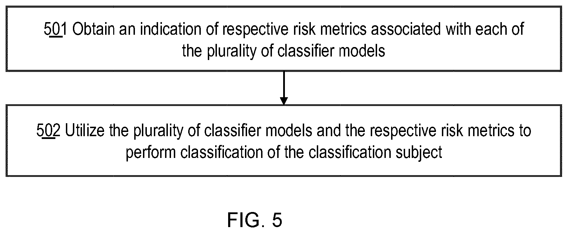

FIG. 5 illustrates an example of a computer implemented method for using a plurality of classifier models to perform classification of a classification subject into one of a plurality of classes.

The method of FIG. 5 may be performed by an evaluation device, which may comprise a physical or virtual apparatus, and may be implemented in a computing device or server apparatus and/or in a virtualized environment, for example in a cloud, edge cloud or fog deployment.

In step 501, the method comprises obtaining an indication of respective risk metrics associated with each of the plurality of classifier models. The respective risk metrics may be obtained by the evaluation device by performing method of FIG. 1 (for example, the risk assessment device and evaluation device may form the same device) or the respective risk metrics may be received from a risk assessment device.

In step 502, the method comprises utilizing the plurality of classifier models and the respective risk metrics to perform classification of the classification subject.

In some examples step 502 comprises determining a combined classifier model by weighting contributions from the plurality of classifier models based on the respective risk metrics. The combined classifier model may be determined in a similar manner to as described above. The method of FIG. 5 may then further comprise using of the combined classifier model to perform the classification.

In some examples, step 502 comprises determining a combined output by weighting outputs from each of the plurality of classifier models based on the respective risk metrics. The combined output is then utilized as the classification.

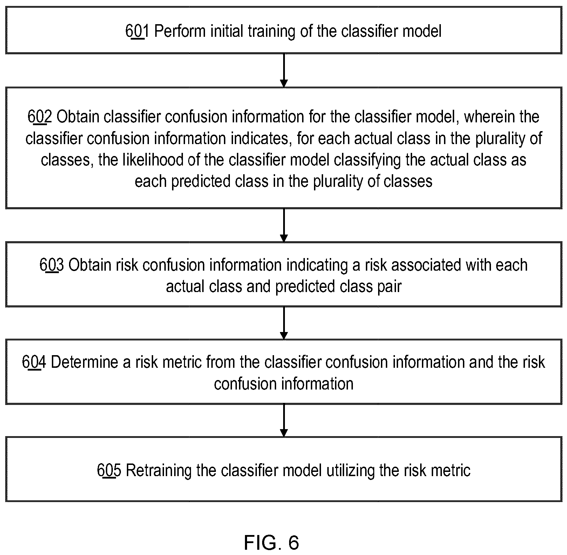

FIG. 6 illustrates a computer implemented method for training a classifier model to perform classification of a classification subject into one of a plurality of classes.

The method of FIG. 5 may be performed by a model training device, which may comprise a physical or virtual apparatus, and may be implemented in a computing device or server apparatus and/or in a virtualized environment, for example in a cloud, edge cloud or fog deployment.

In step 601 the method comprises performing initial training of the classifier model. The initial training may comprise supervised learning However, it will be appreciated that other learning models may be utilized such as reinforcement learning and unsupervised learning.

In step 602, the method comprises obtaining classifier confusion information for the classifier model, wherein the classifier confusion information indicates, for each actual class in the plurality of classes, the likelihood of the classifier model classifying the actual class as each predicted class in the plurality of classes. It will be appreciated that the classifier confusion information for the classifier model may be similar to as described above with reference to FIG. 1 and FIG. 2.

Step 603 comprises obtaining risk confusion information indicating a risk associated with each actual class and predicted class pair. Step 603 may be performed similarly to step 102 0f FIG. 1. An example risk confusion information is given in FIG. 3.

Step 604 comprises determining a risk metric from the classifier confusion information and the risk confusion information. Step 604 may be performed similarly to as described with reference to step 103 of FIG. 1. Examples of a risk metric are illustrated and described with reference to FIG. 4.

Step 605 comprises retraining the classifier model utilizing the risk metric. For example, the risk metric may be used to understand how risky overall one classifier model is compared to others. Firstly, it can help determine how one particular classifier model is performing compared to others based on the decisions made (looking at the misclassifications of one model for example). Additionally, by using the risk metric, we can understand specifically the categories of defects for which a model performed poorly and try to understand why. One option would be to look at the training data supplied to a particular classifier model. For example, based on the risk metric, it may be investigated whether enough training data used for a specific defect category, or if the training data of a good enough quality, or how dataset for a particular defect category compares with other defect categories etc. The training data may then be updated and/or improved, and the classifier model retrained.

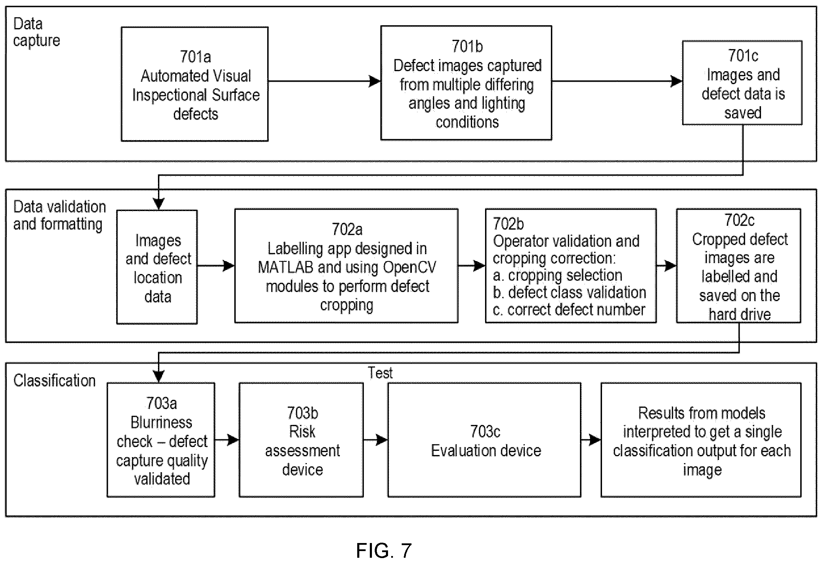

FIG. 7 illustrates an example system capable of implementing the methods of FIG. 1 and FIG. 5. The system of FIG. 7 is illustrated as being applied to the particular example of classifying faults in images of manufactured components. It will however be appreciated that similar systems may be applied to other applications for the embodiments described herein.

In the system of FIG. 7 there are three parts to the processing of the classification subjects.

In part 701, the data capture is performed. In particular automated visual inspection 701a may be performed on surface defects in manufacture components. The images may be captured from multiple different angles and lighting conditions 701b. The images may then be saved 701c.

In part 702 the data is validated and formatted. For example, a labeling application 702a may be used to perform defect cropping, in other words, to focus the images on the defects. In 702b, the operator performs a manual inspection of the manufactured components and may mark on an inspection sheet the defect classification, checking the decision by the machine compared to the manual process. The cropped images may then be saved 702c.

In part 703 the classification of the cropped images is then performed. Firstly, the cropped images may be filtered 703a to remove any low-quality images. The images may then be passes to a risk assessment device 703b. The risk assessment device 703b may comprise a risk assessment device 800 as described with reference to FIG. 8 below. The risk assessment device 703b may have access to a plurality of classifier models capable of classifying the cropped images. The risk assessment device 703b then performs the method of FIG. 1 and initiates use of one or more of the plurality of classifier models based on the respective risk metrics in the evaluation device 703c.

In some examples, the risk assessment device transmits the respective risk metrics for a plurality of classifier models to the evaluation device 703c. In this example, the evaluation device 703c performs the method of FIG. 5.

In other examples, the risk assessment device 703b transmits a representation of a selected or a combined classifier model to the evaluation device 703c, and the evaluation device 703c utilizes the selected or combined classifier model to perform the classification.

An output, either from a combined classifier model, a selected classifier model or a combined output from a plurality of classifier models, may then be provided to classify the cropped images.

FIG. 8 illustrates a risk assessment device 800 comprising processing circuitry (or logic) 801. The processing circuitry 801 controls the operation of the risk assessment device 800 and can implement the method described herein in relation to a risk assessment device 800. The processing circuitry 801 can comprise one or more processors, processing units, multi-core processors or modules that are configured or programmed to control the risk assessment device 800 in the manner described herein. In particular implementations, the processing circuitry 801 can comprise a plurality of software and/or hardware modules that are each configured to perform, or are for performing, individual or multiple steps of the method described herein in relation to the risk assessment device 800. It will be appreciated that the risk assessment device 800 may comprise one or more virtual machines running different software and/or processes. The risk assessment device 800 may therefore comprise, or be implemented in or as one or more servers, switches and/or storage devices and/or may comprise cloud computing infrastructure that runs the software and/or processes.

Optionally, the risk assessment device 800 may comprise a memory 803. In some embodiments, the memory 803 of the risk assessment device 800 can be configured to store instructions (e.g., program code) executable by the processing circuitry 801 of the risk assessment device 800 whereby the apparatus is operable to perform the method as described with reference to FIG. 1.

Alternatively or in addition, the memory 803 of the risk assessment device 800, can be configured to store any requests, resources, information, data, signals, or similar that are described herein. The processing circuitry 801 of the risk assessment device 800 may be configured to control the memory 803 of the risk assessment device 800 to store any requests, resources, information, data, signals, or similar that are described herein

In some embodiments, the risk assessment device 800 may optionally comprise a communications interface 802. The communications interface 802 of the risk assessment device 800 can be for use in communicating with other device, such as other virtual devices or nodes. For example, the communications interface 802 of the risk assessment device 800 can be configured to transmit to and/or receive from other device requests, resources, information, data, signals, or similar. The processing circuitry 801 of risk assessment device 800 may be configured to control the communications interface 802 of the risk assessment device 800 to transmit to and/or receive from other devices requests, resources, information, data, signals, or similar. The communications interface 802 can use any suitable communication technology.

The risk assessment device 800 may be configured to operate in the manner described herein in respect of a risk assessment device.

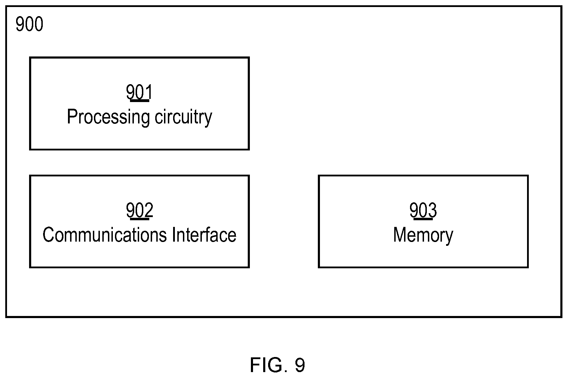

**FIG. 9** illustrates an evaluation device 900 comprising processing circuitry (or logic) 901. The processing circuitry 901 controls the operation of the evaluation device 900 and can implement the method described herein in relation to an evaluation device 900. The processing circuitry 901 can comprise one or more processors, processing units, multi-core processors or modules that are configured or programmed to control the evaluation device 900 in the manner described herein. In particular implementations, the processing circuitry 901 can comprise a plurality of software and/or hardware modules that are each configured to perform, or are for performing, individual or multiple steps of the method described herein in relation to the evaluation device 900.

It will be appreciated that the evaluation device 900 may comprise one or more virtual machines running different software and/or processes. The evaluation device 900 may therefore comprise, or be implemented in or as one or more servers, switches and/or storage devices and/or may comprise cloud computing infrastructure that runs the software and/or processes.

Optionally, the evaluation device 900 may comprise a memory 903. In some embodiments, the memory 903 of the evaluation device 900 can be configured to store instructions (e.g., program code) executable by the processing circuitry 901 of the evaluation device 900 whereby the apparatus is operable to perform the method as described with reference to FIG. 5.

Alternatively or in addition, the memory 903 of the evaluation device 900, can be configured to store any requests, resources, information, data, signals, or similar that are described herein. The processing circuitry 901 of the evaluation device 900 may be configured to control the memory 903 of the evaluation device 900 to store any requests, resources, information, data, signals, or similar that are described herein

In some embodiments, the evaluation device 900 may optionally comprise a communications interface 902. The communications interface 902 of the evaluation device 900 can be for use in communicating with other devices, such as other virtual devices or nodes. For example, the communications interface 902 of the evaluation device 900 can be configured to transmit to and/or receive from other devices requests, resources, information, data, signals, or similar. The processing circuitry 901 of evaluation device 900 may be configured to control the communications interface 902 of the evaluation device 900 to transmit to and/or receive from other device requests, resources, information, data, signals, or similar. The communications interface 902 can use any suitable communication technology.

The evaluation device 900 may be configured to operate in the manner described herein in respect of an evaluation device.

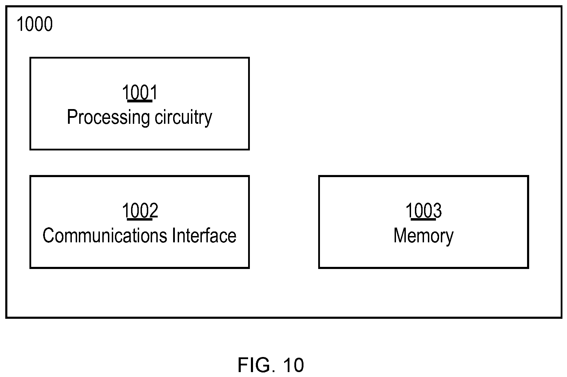

**FIG. 10** illustrates a model training device 1000 comprising processing circuitry (or logic) 1001. The processing circuitry 1001 controls the operation of the model training device 1000 and can implement the method described herein in relation to a model training device 1000. The processing circuitry 1001 can comprise one or more processors, processing units, multi-core processors or modules that are configured or programmed to control the model training device 1000 in the manner described herein. In particular implementations, the processing circuitry 1001 can comprise a plurality of software and/or hardware modules that are each configured to perform, or are for performing, individual or multiple steps of the method described herein in relation to the model training device 1000. It will be appreciated that the model training device 1000 may comprise one or more virtual machines running different software and/or processes. The model training device 1000 may therefore comprise, or be implemented in or as one or more servers, switches and/or storage devices and/or may comprise cloud computing infrastructure that runs the software and/or processes.

Optionally, the model training device 1000 may comprise a memory 1003. In some embodiments, the memory 1003 of the model training device 1000 can be configured to store instructions (e.g., program code) executable by the processing circuitry 1001 of the model training device 1000 whereby the apparatus is operable to perform the method as described with reference to FIG. 6.

Alternatively or in addition, the memory 1003 of the model training device 1000, can be configured to store any requests, resources, information, data, signals, or similar that are described herein. The processing circuitry 1001 of the model training device 1000 may be configured to control the memory 1003 of the model training device 1000 to store any requests, resources, information, data, signals, or similar that are described herein

In some embodiments, the model training device 1000 may optionally comprise a communications interface 1002. The communications interface 1002 of the model training device 1000 can be for use in communicating with other devices, such as other virtual devices or nodes. For example, the communications interface 1002 of the model training device 1000 can be configured to transmit to and/or receive from other devices requests, resources, information, data, signals, or similar. The processing circuitry 1001 of model training device 1000 may be configured to control the communications interface 1002 of the model training device 1000 to transmit to and/or receive from other devices requests, resources, information, data, signals, or similar. The communications interface 1002 can use any suitable communication technology.

The model training device 1000 may be configured operate in the manner described herein in respect of a model training device.

There is also provided a computer program comprising instructions which, when executed on at least one processing circuitry (such as the processing circuitry 801 of the risk assessment device 800 described earlier), cause the processing circuitry to carry out at least part of the method(s) described herein. According to some embodiments there is provided a carrier containing the computer program. In some embodiments, the carrier can be any one of an electronic signal, an optical signal, an electromagnetic signal, an electrical signal, a radio signal, a microwave signal, or a computer-readable medium. There is also provided a (for example, tangible and/or non-transient) computer-readable medium comprising instructions which, when executed by at least one processing circuitry, cause at least one processing circuitry to perform at least part of the method(s) described herein.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processing circuitry or other unit may fulfil the functions of several units recited in the claims. Any reference signs in the claims shall not be construed so as to limit their scope.

## Claims

1. A computer implemented method for initiating use of one or more classifier models to perform classification of a classification subject into one of a plurality of classes, the method comprising:

   for each of a plurality of classifier models, obtaining (101) respective classifier confusion information, wherein the classifier confusion information indicates, for each actual class in the plurality of classes, the likelihood of the classifier model classifying the actual class as each predicted class in the plurality of classes;
   obtaining (102) risk confusion information indicating a risk associated with each actual class and predicted class pair;
   for each of the plurality of classifier models, determining (103) a respective risk metric from the respective classifier confusion information and the risk confusion information; and
   initiating (104) use of one or more of the plurality of classifier models based on the respective risk metrics.

2. The method as claimed in claim 1 wherein initiating use of one or more of the plurality of classifier models comprises:

   selecting one of the plurality of classifier models for use in performing classification of the classification subject based on the respective risk metrics; and
   initiating performance of the classification using the selected classifier model.

3. The method as claimed in claim 1 wherein initiating use of one or more of the plurality of classifier models comprises initiating determination of a combined classifier model wherein the combined classifier model is determined by weighting contributions from the plurality of classifier models based on the respective risk metrics.

4. The method as claimed in claim 3 wherein initiating use of one or more of the plurality of classifier models further comprises:
initiating use of the combined classifier model to perform the classification.

5. The method as claimed in claim 1 wherein initiating use of the one or more of the plurality of classifier models comprises:
initiating determination of a combined output, wherein the combined output is determined by weighting outputs from each of the plurality of classifier models based on the respective risk metrics.

6. The method as claimed in claim 5 wherein initiating use of the one or more of the plurality of classifier models comprises transmitting the respective risk metrics to an evaluation device.

7. The method as claimed in any preceding claim wherein the respective classifier confusion information comprises a respective classifier confusion matrix (201, 202), and wherein the risk confusion information comprises a risk confusion matrix (300).

8. The method as claimed in claim 7 wherein determining the respective risk metric comprises:
determining a classifier specific risk matrix (401, 402) as a dot product of the respective classifier confusion matrix (201, 202) and the risk confusion matrix (300); and summing the elements of the classifier specific risk matrix to determine the respective risk metric.

9. The method as claimed in any preceding claim wherein:

the classification subject comprises an image of a manufactured component and
the plurality of classes comprises different anomalies in an image of the manufactured component.

10. A computer implemented method for using a plurality of classifier models to perform classification of a classification subject into one of a plurality of classes, the method comprising:

obtaining (501) an indication of respective risk metrics associated with each of the plurality of classifier models; and
utilizing (502) the plurality of classifier models and the respective risk metrics to perform classification of the classification subject.

11. A computer implemented method for training a classifier model to perform classification of a classification subject into one of a plurality of classes, the method comprising:

performing (601) initial training of the classifier model;
obtaining (602) classifier confusion information for the classifier model, wherein the classifier confusion information indicates, for each actual class in the plurality of classes, the likelihood of the classifier model classifying the actual class as each predicted class in the plurality of classes;
obtaining (603) risk confusion information indicating a risk associated with each actual class and predicted class pair;
determining (604) a risk metric from the classifier confusion information and the risk confusion information, and
retraining (605) the classifier model utilizing the risk metric.

12. A risk assessment apparatus (800) for initiating use of one or more classifier models to perform classification of a classification subject into one of a plurality of classes, the risk assessment device comprising processing circuitry (801) configured to perform the method as claimed in any one of claims 1 to 9.

13. An evaluation apparatus (900) for using a plurality of classifier models to perform classification of a classification subject into one of a plurality of classes, the evaluation device comprising processing circuitry (901) configured to perform the method as claimed in claim 10.

14. A model training apparatus (1000) for training a classifier model to perform classification of a classification subject into one of a plurality of classes, the model training device comprising processing circuitry (1001) configured to perform the method as claimed in claim 11.

15. A machine readable medium storing instructions which, when executed by a processor, cause the processor to carry out the method of any of claims 1 to 11.

101 For each of a plurality of classifier models, obtain respective classifier confusion information, wherein the classifier confusion information indicates, for each actual class in the plurality of classes, the likelihood of the classifier model classifying the actual class as each predicted class in the plurality of classes

102 Obtain risk confusion information indicating a risk associated with each actual class and predicted class pair

103 For each of the plurality of classifier models, determine a respective risk metric from the respective classifier confusion information and the risk confusion information

104 Initiate use of one or more of the plurality of classifier models based on the respective risk metrics

FIG. 1

| $x_{1,1} = 60$ | $x_{1,2} = 10$ | $x_{1,3} = 10$ | $x_{1,4} = 20$ |
|---|---|---|---|
| $x_{2,1} = 35$ | $x_{2,2} = 40$ | $x_{2,3} = 25$ | $x_{2,4} = 0$ |
| $x_{3,1} = 10$ | $x_{3,2} = 5$ | $r_{3,3} = 85$ | $r_{3,4} = 0$ |
| $x_{4,1} = 5$ | $x_{4,2} = 15$ | $x_{4,3} = 30$ | $x_{4,4} = 50$ |

201

| $y_{1,1} = 50$ | $y_{1,2} = 0$ | $y_{1,3} = 50$ | $y_{1,4} = 0$ |
|---|---|---|---|
| $y_{2,1} = 10$ | $y_{2,2} = 80$ | $y_{2,3} = 10$ | $y_{2,4} = 0$ |
| $y_{3,1} = 0$ | $y_{3,2} = 0$ | $y_{3,3} = 90$ | $y_{3,4} = 10$ |
| $y_{4,1} = 50$ | $y_{4,2} = 0$ | $y_{4,3} = 0$ | $y_{4,4} = 50$ |

202

FIG. 2

| | | | |
|---|---|---|---|
| $r_{1,1} = 0$ | $r_{1,2} = 1$ | $r_{1,3} = 8$ | $r_{1,4} = 3$ |
| $r_{2,1} = 3$ | $r_{2,2} = 0$ | $r_{2,3} = 2$ | $r_{2,4} = 0$ |
| $r_{3,1} = 0$ | $r_{3,2} = 5$ | $r_{3,3} = 0$ | $r_{3,4} = 10$ |
| $r_{4,1} = 10$ | $r_{4,2} = 0$ | $r_{4,3} = 3$ | $r_{4,4} = 0$ |

300

FIG. 3

**402**

| 0 | 300 | 400 | 650 |
|---|-----|-----|-----|
| 640 | 60 | 240 | 130 |
| 100 | 450 | 30 | 900 |
| 500 | 50 | 550 | 150 |

**401**

| 230 | 110 | 560 | 280 |
|-----|-----|-----|-----|
| 120 | 160 | 360 | 355 |
| 15 | 435 | 90 | 880 |
| 545 | 155 | 220 | 315 |

**FIG. 4**

501 Obtain an indication of respective risk metrics associated with each of the plurality of classifier models

502 Utilize the plurality of classifier models and the respective risk metrics to perform classification of the classification subject

FIG. 5

601 Perform initial training of the classifier model

602 Obtain classifier confusion information for the classifier model, wherein the classifier confusion information indicates, for each actual class in the plurality of classes, the likelihood of the classifier model classifying the actual class as each predicted class in the plurality of classes

603 Obtain risk confusion information indicating a risk associated with each actual class and predicted class pair

604 Determine a risk metric from the classifier confusion information and the risk confusion information

605 Retraining the classifier model utilizing the risk metric

FIG. 6

**Data capture**

701a
Automated Visual Inspectional Surface defects

→

701b
Defect images captured from multiple differing angles and lighting conditions

→

701c
Images and defect data is saved

**Data validation and formatting**

Images and defect location data

→

702a
Labelling app designed in MATLAB and using OpenCV modules to perform defect cropping

→

702b
Operator validation and cropping correction:
a. cropping selection
b. defect class validation
c. correct defect number

→

702c
Cropped defect images are labelled and saved on the hard drive

**Classification**

Test

703a
Blurriness check – defect capture quality validated

→

703b
Risk assessment device

→

703c
Evaluation device

→

Results from models interpreted to get a single classification output for each image

FIG. 7

800

801
Processing circuitry

802
Communications Interface

803
Memory

FIG. 8

900

901
Processing circuitry

902
Communications Interface

903
Memory

FIG. 9

```
1000

    ┌─────────────────────┐
    │        1001         │
    │  Processing circuitry│
    └─────────────────────┘

    ┌─────────────────────┐        ┌─────────────────────┐
    │        1002         │        │        1003         │
    │Communications Interface│     │       Memory        │
    └─────────────────────┘        └─────────────────────┘
```

FIG. 10

Europäisches
Patentamt

European
Patent Office

Office européen
des brevets

# EUROPEAN SEARCH REPORT

**Application Number**

EP 24 20 8165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUPONT F ET AL: "Optimization of the recognition of defects in flat steel products with the cost matrices theory", NDT&E INTERNATIONAL, ELSEVIER, AMSTERDAM, NL, vol. 30, no. 1, 1 February 1997 (1997-02-01), pages 3-10, XP004291879, ISSN: 0963-8695, DOI: 10.1016/S0963-8695(96)00045-X * page 1 - page 6 * | 1-15 | INV.<br>G06N3/045<br>F01D21/00<br>G06T7/00 |
| X | DI ZHUANG ET AL: "CS-AF: A Cost-sensitive Multi-classifier Active Fusion Framework for Skin Lesion Classification", ARXIV.ORG, CORNELL UNIVERSITY LIBRARY, 201 OLIN LIBRARY CORNELL UNIVERSITY ITHACA, NY 14853, 25 April 2020 (2020-04-25), XP081652812, | 1-8, 10-15 | |
| A | * pages 1-5; figures 1-3 * | 9 | |
| | | | TECHNICAL FIELDS SEARCHED (IPC) |
| | | | G06N<br>G06T<br>F01D |

The present search report has been drawn up for all claims

| Place of search | Date of completion of the search | Examiner |
|---|---|---|
| The Hague | 14 February 2025 | Nourestani, S |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P04C01)